# EUROPEAN PATENT APPLICATION

(11) **EP 1 542 326 A2**
(43) Date of publication of application: **15.06.2005**
(21) Application number: 04257655.3
(22) Date of filing: 09.12.2004
(51) Int. Cl.: H02G 1/00

(54) **An electrical backbox plastering guide**

(30) Priority: 10.12.2003 GB 0328559
(71) Applicant: Leedham-Smith, Philip, Herefordshire HR6 9ST (GB)
(72) Inventor: Leedham-Smith, Philip, Herefordshire HR6 9ST (GB)
(74) Representative: Bailey, Richard Alan

(57) **Abstract**

A plastering guide (10) for an electrical socket or switch backbox comprises a guide body (12) which is shaped to closely fit and project from a single or multiple gang electrical backbox (20) positioned in a cavity (38) in a wall (40). In use, the close fit of one or more sides (18) of the guide body (12) with the backbox (20) prevents or limits the ingress of wet plaster (48) into the backbox (20). A method is also provided.

## Description

This invention relates to a plastering guide for preventing overspill of plaster into an electrical socket or switch backbox positioned in a wall cavity.

Plasterers often find it problematic to neatly finish plasterwork around an electrical socket or switch backbox wall cavity. The plaster being applied often overspills into the backbox and/or slopes towards the cavity causing a non-planar and unsightly finished surface.

The present invention seeks to provide a solution to this problem.

According to a first aspect of the present invention, there is provided an electrical backbox plastering guide comprising a guide body having one or more sides, characterised in that the guide body is shaped to closely fit a single or multiple gang electrical backbox positioned in a cavity in a wall, so that in use the guide body prevents or limits the ingress of wet plaster into the backbox.

Preferable and/or optional features of the first aspect of the invention are set forth in claims 2 to 7, inclusive.

According to a second aspect of the invention, there is provided a method of using an electrical backbox plastering guide in accordance with the first aspect of the invention, the method comprising the steps of :
a) determining the size and shape of an electrical backbox positioned in a cavity in a wall;
b) selecting an electrical backbox plastering guide which closely matches the size and shape of the backbox;
c) engaging the plastering guide with the backbox;
d) applying plaster to the surface of the wall up to and around the guide body of the plastering guide; and
e) removing the plastering guide from the backbox.

Preferably, in step (e), the plastering guide is removed when the plaster is set or partially set.

The method may further comprise a step (f), subsequent to step (e), of disposing of the plastering guide when steps (a) to (e) have been repeated a sufficient number of times to complete a job.

The invention will now be more particularly described, by way of example, with reference to the accompanying drawings, in which :
Figure 1 is a perspective view of one embodiment of an electrical backbox plastering guide, in accordance with the first aspect of the present invention;
Figure 2 is a top plan view of the plastering guide shown in Figure 1;
Figure 3 is an end view of the plastering guide shown in Figure 1; and
Figure 4 is a diagrammatic side view of the plastering guide shown inserted into an electrical backbox housed in a cavity of a plastered wall.

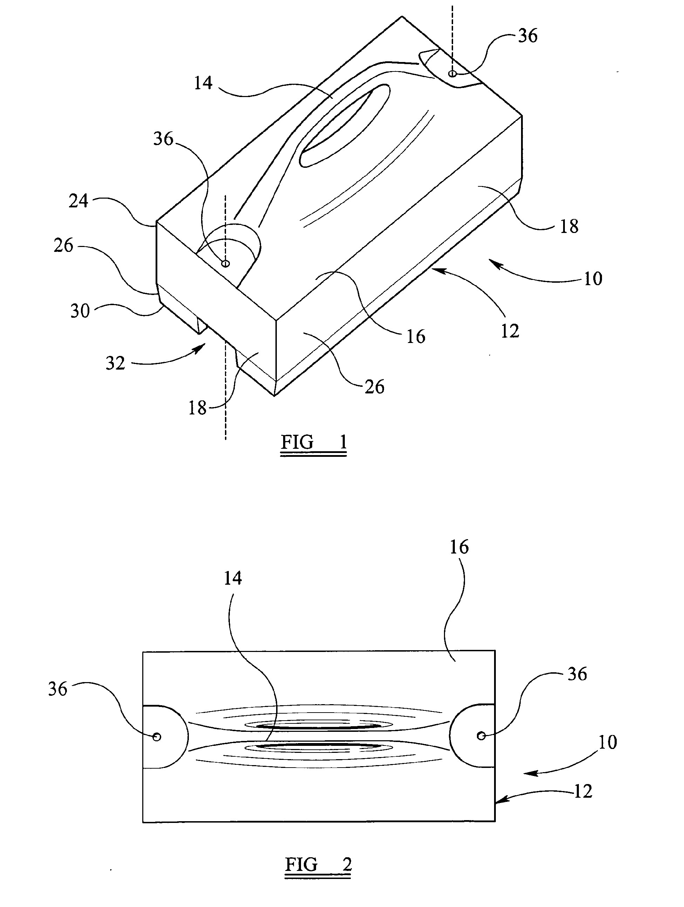

Referring firstly to Figures 1 to 3, there is shown an electrical backbox plastering guide 10 which comprises a guide body 12 and a handle 14 formed on the guide body 12.

The guide body 12 comprises a front wall 16 and four side walls 18 which extend from the front wall 16. The front wall 16 and side walls 18 defme an open-bottomed container or housing. The guide body 12 is dimensioned to be wedge fittable in an electrical backbox 20. Although, in this case, the guide body 12 corresponds to a two-gang electrical backbox, the guide body can correspond to a single gang backbox, or to a three gang, or more, backbox.

The plastering guide 10 is typically formed from moulded plastics, and in this case the handle 14 is integrally formed on the exterior of the front wall 16. However, the plastering guide 10 could be formed from any suitable material.

The side walls 18 have a leading end 22 which is remote from the front wall 16 and a trailing end 24 which meets the front wall 16. The leading end 22 of the side walls 18 is formed with a tapering portion 26. The tapering portion 26 has a convergent or inward taper in a direction away from the front wall 16. The tapering portion 26 is defined by a plurality of steps 28 which descends towards a leading edge 30 of the guide body 12.

Although steps 28 are utilised, serrations or other suitable formations could be used instead, and the term 'steps', used throughout, is intended to include these other possibilities.

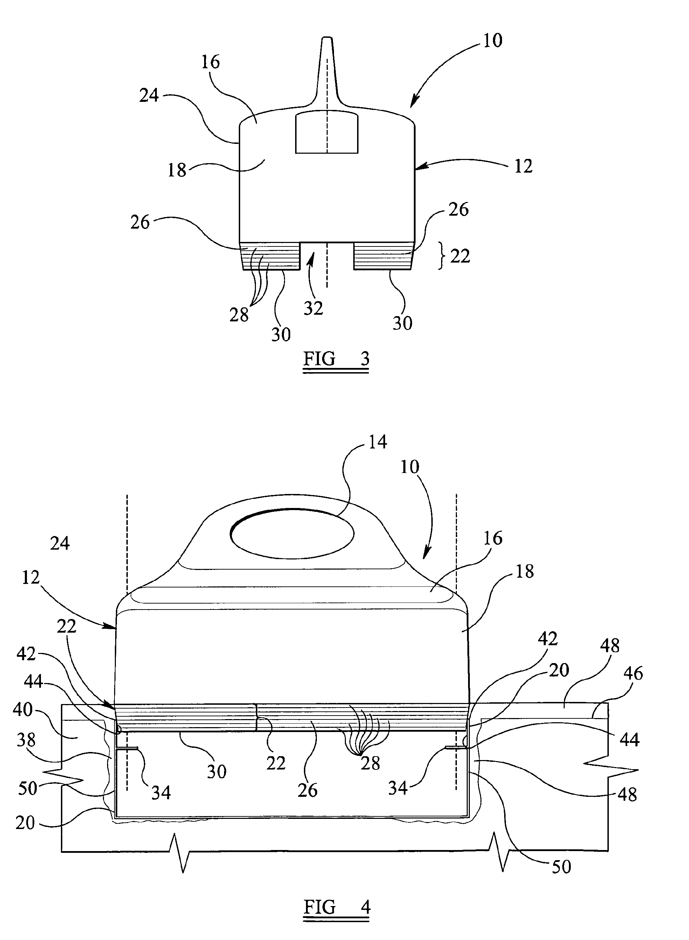

As can best be seen in Figure 3, the tapering portion 26 is non-continuous around the perimeter of the body 12. The tapering portion 26 is provided with two opposing recesses 32, each of which is symmetrically, or substantially symmetrically, positioned midway along opposing side walls 18. Each recess 32 can accommodate a common electrical backbox fastening flange or mounting 34 to which a socket plate or switching plate (neither of which is shown) is attachable.

The guide body 12, as best seen in Figures 1 and 2, is also provided with two through-holes 36 in the front wall 16. Each through-hole 36 is positioned adjacent to a side wall 18 and corresponds with a respective tapering portion recess 32. Although not an essential feature, the through-holes 36 are recessed into the outer surface of the front wall 16.

Once an electrical backbox 20 has been inserted into a cavity 38 formed in a wall 40 to be plastered, the plastering guide 10 is selected based upon the gang of the backbox 20. In the case illustrated in Figure 4, the backbox 20 is two gang, and therefore the plastering guide 10 chosen is dimensioned to closely fit a two gang backbox.

The leading end 22 of the plastering guide 10 is offered up to the electrical backbox 20, and the plastering guide 10 is then urged into the backbox 20 until wedge fit engagement is achieved. The tapering portion 26 of the plastering guide 10 wedges against the front edge 42 and/or interior surface 44 adjacent the front edge 42 of the backbox 20, thus holding the plastering guide 10 to the backbox 20 without further user assistance. The remainder of the plastering guide 10 projects outwardly beyond the plane of the wall 40 to be plastered.

As an alternative, or in cases where the wedge fit engagement is insufficient, screw-threaded fastening devices (not shown) can be inserted in the through-holes 36 of the plastering guide 10 and screw-threadingly engaged with the backbox fastening flanges or mountings 34.

Once the plastering guide 10 is securely held by the backbox 20, the surface 46 of the wall 40 surrounding the electrical backbox 20 is plastered. The plaster 48 is applied evenly and uniformly up to and into contact with the plastering guide 10. The plastering guide, acting as a shield, prevents or limits the wet plaster 48 overflowing or spilling into the backbox 20. Plaster 48 can run down the exterior surfaces 50 of the backbox 20, which aids in securing the backbox 20 in the wall cavity 38.

Once the plaster 48 has set, or even partially set, the plastering guide 10 is removed from the backbox 20. Either the plastering guide 10 is simply pulled out of wedge fit engagement with the backbox 20, using the handle 14, or the screw-threaded fastening devices are first released and the plastering guide 10 is then lifted away. Even when the plaster 48 is fully set, the inwardly tapering portion 26 facilitates easy removal.

The plastering guide 10 can be wiped or scraped clean and re-used until a job is completed.

It is envisioned that the plastering guide can be a disposable item. In this case, the plastering guide is typically used until a specific job is completed. This has the advantage that the plastering guide does not need to be carefully cleaned after use ready for storage and re-use at a later date.

The guide body is typically quadrilateral shape, but can be formed to fit any shape of electrical backbox, including circular. In the case where the backbox is circular, the guide body will also be circular, or substantially circular, and will, as such, have only one continuous side wall.

The steps of the tapering portion can be dispensed with, and the tapering portion can simply be a smooth tapering surface. Although wedge fit engagement of the plastering guide and the use of fastening devices are described, any other suitable means for holding the plastering guide to the backbox can be used. For example, the leading edge of the guide body could be formed with a deformable channel adapted to receive the front edge 42 of the backbox as a push fit.

The guide body may be dimensioned to simply abut the front edge 42 of the backbox, rather then being receivable within the backbox. Alternatively, the guide body may be adapted to closely fit around the outside of the backbox, instead of within the backbox. In these cases, the tapering portion may be dispensed with.

It is thus possible to provide an electrical backbox plastering guide which prevents or limits the overflow or overspill of plaster into an electrical socket or switch backbox. It is also possible to provide a plastering guide which is cheap to produce and therefore disposable, thus dispensing with time consuming cleaning after completion of a job.

The embodiments described above are given by way of examples only, and modifications will be apparent to persons skilled in the art without departing from the scope of the invention as defined by the appended claims. For example, only one through-hole need be provided.

## Claims

1. An electrical backbox plastering guide comprising a guide body (12) having one or more sides (16,18), **characterised in that** the guide body (12) is shaped to closely fit a single or multiple gang electrical backbox positioned in a cavity in a wall, so that in use the guide body (12) prevents or limits the ingress of wet plaster into the backbox.

2. A plastering guide as claimed in claim 1, further comprising means (26,28) for holding the guide body (12) to the backbox.

3. A plastering guide as claimed in claim 2, wherein the holding means includes a tapering portion (26) formed on the guide body (12), the tapering portion enabling the guide body (12) to be wedge fit engageable with the backbox.

4. A plastering guide as claimed in 3, wherein the tapering portion (26) is formed from a plurality of steps (28), the steps promoting wedge fit engagement of the guide body (12) with the backbox.

5. A plastering guide as claimed in any one of claims 2 to 4, wherein the holding means includes one or more through-holes (36) formed in the guide body (12) by which the plastering guide can be releasably fastened to the backbox via a respective screw-threaded fastening device receivable in the or each through-hole (36) and engageable with a mating threaded opening of the backbox.

6. A plastering guide as claimed in any one of the preceding claims, further comprising a handle (14) formed on the body (12).

7. A plastering guide as claimed in any one of the preceding claims, wherein the plastering guide (10) is a one-job disposable item.

8. A method of using an electrical backbox plastering guide (10) as claimed in any one of the preceding claims, the method comprising the steps of:
a) determining the size and shape of an electrical backbox positioned in a cavity in a wall;
b) selecting an electrical backbox plastering guide (10) which closely matches the size and shape of the backbox;
c) engaging the plastering guide (10) with the backbox;
d) applying plaster to the surface of the wall up to and around the guide body (12) of the plastering guide (10); and
e) removing the plastering guide (10) from the backbox.

9. A method as claimed in claim 8, wherein, in step (e), the plastering guide (10) is removed when the plaster is set or partially set.

10. A method as claimed in claim 8 or claim 9, further comprising a step (f), subsequent to step (e), of disposing of the plastering guide (10) when steps (a) to (e) have been repeated a sufficient number of times to complete a job.
